(19)

Europäisches
Patentamt
European
Patent Office
Office européen
des brevets

(11) **EP 2 790 161 A1**

(12) **EUROPEAN PATENT APPLICATION**
published in accordance with Art. 153(4) EPC

(43) Date of publication:
**15.10.2014 Bulletin 2014/42**

(21) Application number: **12855972.1**

(22) Date of filing: **30.10.2012**

(51) Int Cl.:
***G07F 19/00*** *(2006.01)*

(86) International application number:
**PCT/CN2012/083730**

(87) International publication number:
**WO 2013/082981 (13.06.2013 Gazette 2013/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2011 CN 201110400443**

(71) Applicant: **GRG Banking Equipment Co., Ltd.
Guangdong 510663 (CN)**

(72) Inventors:
• **LUO, Panfeng**
**Guangzhou**
**Guangdong 510663 (CN)**
• **DU, Gaofeng**
**Guangzhou**
**Guangdong 510663 (CN)**

• **XIE, Weiping**
**Guangzhou**
**Guangdong 510663 (CN)**
• **WANG, Qinghua**
**Guangzhou**
**Guangdong 510663 (CN)**
• **HUO, Guojie**
**Guangzhou**
**Guangdong 510663 (CN)**

(74) Representative: **Maiwald Patentanwalts GmbH
Engineering
Elisenhof
Elisenstrasse 3
80335 München (DE)**

(54) **METHOD FOR PROCESSING SERVICE OF AUTOMATIC TELLER MACHINE AND SYSTEM THEREFOR**

(57)      A method and a system for processing a service of an automatic teller machine. The method comprises steps: (1) judging the type of a customer service, and according to requirements of a user, and combining services, which are logically associated and are in a certain processing order, into service sequences; (2) generating corresponding service sequence messages according to the service sequences, and submitting the messages to a bank foreground system and a bank background service system at one time for centralized batch processing; (3) packaging each service operation result in the service sequences in order into a service sequence processing result response message, and returning the service sequence processing result response messages to an automatic teller machine at one time; (4) the automatic teller machine analyzing the response messages, and sequentially displaying transaction results on a screen according to the service sequences. Through the method and the system, one-time centralized processing of a plurality of discrete services of the user is implemented, and finally a plurality of results are sequentially returned and displayed at one time, so that the time of the user is saved, and the operating efficiency of the automatic teller ma-

chine and the service processing efficiency of a bank background terminal are also improved.

It is determined a type of a user service, and services that are logically related and shall be processed in an order according to requirements of the user are combined to one or more service sequences

The ATM generates a corresponding service sequence message according to the service sequence, and submits, for one time only, the corresponding service sequence message to a bank front system and a bank background service system for a centralized batch processing

The bank front system and the bank background service system encapsulate operation results of all services in the service sequence sequentially into a service sequence processing result reply message; and returns, for one time only, the service sequence processing result reply message to the ATM after analysis and processing

The ATM parses the service sequence processing result reply message, and displays transaction results on a screen in sequence in accordance with the service sequence, for direct account-checking for the user

Figure 1

EP 2 790 161 A1

## Description

This application claims the priority of Chinese Patent Application No. 201110400443.6, entitled "METHOD FOR PROCESSING SERVICE OF AUTOMATIC TELLER MACHINE AND SYSTEM THEREFOR", filed with the Chinese Patent Office on December 6, 2011, which is hereby incorporated by reference in its entirety.

## FIELD OF THE INVENTION

The present invention relates to a method for processing a service on an Automated Teller Machine (ATM) and a system thereof, and particularly to a method for one-time batch processing of ATM services and a system thereof.

## BACKGROUND OF THE INVENTION

In the existing ATM service processing method, the batch processing is unavailable, and only one service operation (such as query, withdrawal, transfer, and deposit) can be submitted each time. A next service operation is allowed to be carried out only after a processing result of a service is returned. Usually, in practice, a user performs a first query to be aware of the balance in his account before a withdrawal, and performs a second query to be aware of the balance in his account after he withdraws the cash, and thus the withdrawal operation is finished. Such a series of composite service operation is often required by users. For example, for a "query - withdrawal - query" service, the user must carry out three service operations to complete the service. For an ATM transaction system, whenever a service is executed, a terminal program needs to carry out a service processing with packing, unpacking and sending of a message, a bank front system needs to carry out message receiving and sending for twice and message processing for twice, and a bank server needs to carry out one service processing. For a composite service sequence such as "query - withdrawal - query", the ATM transaction system needs to consume about trinary system overhead to help the user to complete a withdrawal operation in which an indirect account-checking is enabled.
This service processing method splits off a composite service sequence with logic chains artificially, thus lacks necessary flexibility and can not achieve direct account-checking of each service for the user. Therefore, it is un-intuitive, inaccurate, un-instant, and it also requires the user to remember account information. Meanwhile, this leads to invaluable service time wasting of the ATM, prolongation of user service operating time, and complication of user service operating steps.
In addition, for a bank back-end server, operations of the ATM service such as receiving, unpacking, processing, packing, sending, etc., which can be carried out collectively in one-time batch processing, must be carried out in many times, which brings a lot of unnecessary repetitive operations for the bank back-end server, thus resulting in a wasting of server resources, reducing processing performance of the bank service server and the bank front system, and reducing resource utilization of the ATM transaction system.

## SUMMARY OF THE INVENTION

An object of the present invention is to provide a method for processing services on an ATM and a system thereof, which achieve centralized processing for multiple discrete services of a user, and finally return and display simultaneously multiple results in sequence, so as to satisfy an account-checking requirement of the user, save the user time, facilitate a comparison of change in the user account, also improve operation efficiency of the ATM, save resources of the whole ATM transaction system, and especially enhance processing performance of a bank background service system and a bank front system.
The present invention provides a method for processing services on an ATM, including steps of:

(1) determining a type of a user service, and combining, according to requirements of the user, services that are logically related and shall be processed in an order into one or more service sequences, wherein the service sequence includes a single service sequence and a composites service sequence;

(2) generating, by the ATM, a corresponding service sequence message according to the service sequence, and submitting, for one time only, the corresponding service sequence message to a bank front system and a bank background service system for a centralized batch processing;

(3) encapsulating, by the bank front system and the bank background service system, operation results of all services in the service sequence sequentially into a service sequence processing result reply message; and returning, for one time only, the service sequence processing result reply message to the ATM after analysis and processing;

(4) parsing, by the ATM, the service sequence processing result reply message, and displaying transaction results on a screen in sequence in accordance with the service sequence, for direct account-checking for the user.

Wherein the step (2) specifically comprises:

performing, by the bank front system, a relevant processing on the composite service sequence if the bank front system receives the composite service sequence, and sending the processed composite service sequence to a transaction monitoring system, or adding relevant information into the generated composite service sequence message, and sending the composite service sequence message to the bank background service system, and;

receiving and parsing, by the bank background service system, the composite service sequence message to split the composite service into single services, so as to execute batch processing of the single services in a pipelining manner.

Furthermore, in the step (2),
if the service sequence is a composite service sequence, the composite service sequence message is designed based on an 8583 message standard technique, and the format of the composite service sequence message is as follows:

$$\text{composite service sequence message} = \{\text{public domain message}\} + \{\text{composite service sequence}\};$$

{composite service sequence} refers to a sequence composed of single services in the composite service that are related to each other sequentially, and is obtained by sequentially organizing one or more of {8583 withdrawal inherent message}, {8583 query inherent message}, {8583 password-changing inherent message}, {8583 transfer inherent messages} and {8583 deposit inherent message}; and
the public domain of composite service = {public domain message}; wherein, there are some public domains in a message collection of various services, the public domain is a message sequence composed of domains that are related to a operation user, a operation account, a bank card inherent feature and a operation terminal feature, and the common parameters in the public domain are parameters that are all-purpose to all services and have the same value and do not change in a service operation process.

Furthermore, in the step (2), the receiving and parsing, by the bank back-end service system, the composite service sequence message comprises:

21) parsing the public domain of the composite service sequence message, wherein information obtained from the parsing includes magcard information and password information;

22) parsing a first service message in sequence, adding relevant fields of the public domain to the first service message and packing the first service message into a complete service, and inserting the complete service into a service queue to act as a first service to be executed;

23) parsing subsequent service messages in the composite service sequence and packing the services messages into complete services, and inserting the complete services into the service queue; and

24) executing the service queue in a batch processing manner, and recording the processing result of each of the services into a service reply queue in sequence.

Furthermore, in the step (3), the bank background service system encapsulates the information of the service reply queue into a service sequence processing result reply message, and returns, for one time only, the service sequence processing result reply message to the ATM terminal via the bank front system.
The invention also provides a system for processing services on an ATM, and the system includes:

an ATM terminal, configured to: determine a type of a user service, and combine, according to requirements of the user, services that are logically related and shall be processed in a certain order into a service sequence, wherein the service sequence includes a single service sequence and a composite service sequence; generate a corresponding service sequence message according to the service sequence, and submit, for one time only, the service sequence message to a bank front system and a bank background service system for a centralized batch processing;

wherein, the ATM terminal is further configured to receive and parse a service sequence processing result reply message of the service sequence, and display transaction results on a screen in sequence in accordance with the service sequence, for the user to account-check directly;

a bank front system, configured to perform forwarding and supporting in a process of encapsulating operation results of all services in the service sequence into the service sequence processing result reply message; and

a bank background service system, configured to encapsulate operation results of all services in the service sequence into a service sequence processing result reply message in sequence, and return, for one time only, the service sequence processing result reply message to the ATM terminal via the bank front system after analyzing and processing.

Furthermore, the bank front system is configured to perform a relevant processing on the received composite service sequence and send the processed composite service sequence to a transaction monitoring system, or add relevant information into the generated composite service sequence message, and send the composite service sequence message to the bank background service system; and

the bank background service system is further configured to receive and parse the composite service sequence message and split the composite service into single services, so as to execute batch-processing of the single services in a pipelining manner.

Compared with the prior art, an ordered one-time centralized processing of multiple services is achieved with the solution of the present invention. The ATM terminal, the network system, the bank front system and the bank background service system are improved technically, and their functions are improved synthetically. The solution in which services that are logically related are processed discretely in the prior art is replaced with another solution in which multiple discrete services of a user are processed in an one-time centralized processing manner, and multiple results are returned and displayed in sequence for one time only, which meets an account-checking requirement of the user, saves the user's time, facilitates the user to compare changes in his account, improves the operation efficiency of ATM, saves resources of the whole ATM transaction system, and especially enhances the processing performance of the bank background service transaction system and the bank front system.

According to the space locality phenomenon of the user data storage of the data base of the bank background server and the program locality principle of the bank background transaction system, processing efficiency of the bank background system is improved, the server resource is saved, and the service processing performance of the server is optimized.

Compared with the prior art, the method and system for processing service on an ATM according to the present invention can save the ATM system resources, including the bank front service processing resources, especially the resource of the bank background server service transaction system which is a "bottleneck" of the entire system, and can improve the service processing capabilities of the bank background server service transaction system and the bank front system, also can save the service operation time of the user, and improve efficiency and performance of the ATM terminal system. The user can also have an intuitionistic view on the change in account balance, thus facilitating the user to perform account-checking and enhancing the effect of human-computer interaction.

## BRIEF DESCRIPTION OF THE DRAWINGS

Figure 1 is a flowchart of a method for processing services of an ATM according to an embodiment of the invention;

Figure 2 is a basic schematic diagram showing the implementation of a composite service example of "query + withdrawal + query" according to the invention; and

Figure 3 is a basic schematic diagram showing the implementation of a composite service example of "withdrawal + withdrawal + reversal" according to the invention.

## DETAILED DESCRIPTION OF THE INVENTION

To make the objects, technical solutions and advantages of the invention more clearly, the invention is further described in detail in conjunction with the accompanying drawings.

Based on an idea of task batch processing, it is provided according to the present invention a method for processing a composite service on an ATM, which can make the ATM perform a one-time processing on the user service sequence Therefore, the one-time operation of the composite service sequence on a self-service financial equipment, and the one-time centralized processing by a bank background of multiple services submitted by a certain user are realized. In this case, an ATM terminal user submits a task for once, and the bank background service system processes the task for once. With the method, processing results are returned in sequence, which facilitates the user to check his account.

The ATM service sequence in the present invention refers to services that are logically related and shall be processed in an order according to requirements of the user, such as query, withdrawal, transfer, deposit. Such services can be combined into a service group, i.e. a composite service sequence, such as "query + withdrawal + query", "query + transfer + query", "query + deposit + query", "query + deposit + query + transfer + query". The composite service sequence is submitted by an ATM interrupt system to the bank front and the bank background server service system for one time only for performing batch processing.

The ATM service sequence in the present invention includes a single service sequence and a composite service sequence. The single service includes query, withdrawal, transfer, deposit, etc., and the single service sequence belongs to a form of the service sequence, but a special form of the service sequence. Therefore, the present invention is compatible with the existing service processing.

The method for processing services on an ATM according to the present invention relates to not only a single service, but also a service sequence. The service sequence is submitted to a bank front system and a bank background service system for performing centralized processing, and the bank front system and the bank background service system return a sequential operation result of each service in the service sequence to the ATM for one time only. This is because when a user operates on the ATM, he wishes to perform such a composite service sequence operation. The bank background server transaction system relates to pure software processing, and thus the error rate is low and the execution efficiency is high.

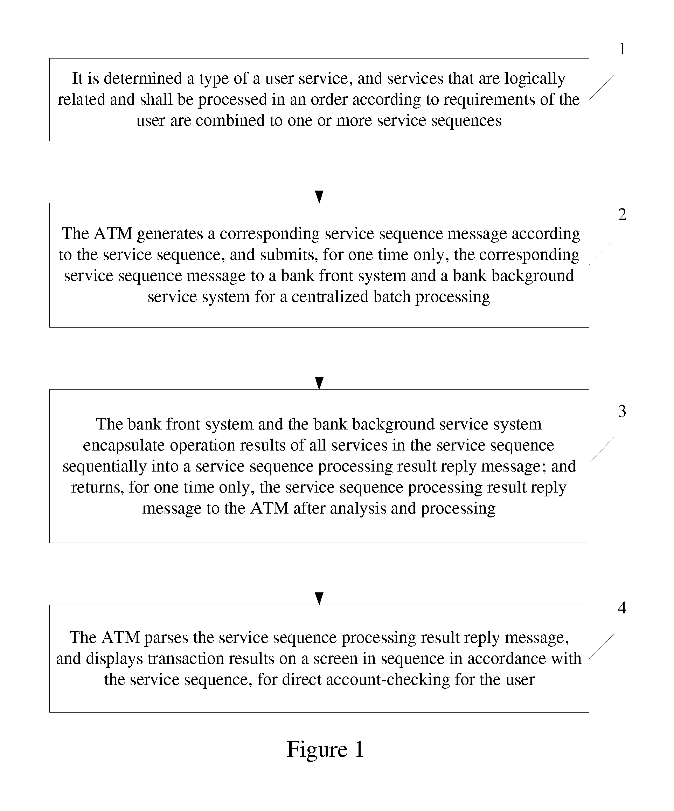

As shown in Figure 1, a method for processing services on an ATM includes the following steps (1) to (4).

(1) It is determined a type of a user service, and services that are logically related and shall be processed in an order according to requirements of the user are combined to one or more service sequences, where the service sequence includes a single service sequence and a composite service sequence.

The user operates on the ATM according to a service operation flow to set or select a service sequence. If the user selects a single service, the ATM operates in accordance with the method in the prior art; or if the user selects or sets a composite service sequence, the ATM generates a composite service sequence according to the service operation of the user.

(2) The ATM generates a corresponding service sequence message according to the service sequence, and submits, for one time only, the corresponding service sequence message to a bank front system and a bank background service system for a centralized batch processing.

(3) The bank front system and the bank background service system encapsulate operation results of all services in the service sequence sequentially into a service sequence processing result reply message; and returns, for one time only, the service sequence processing result reply message to the ATM after analysis and processing.

(4) The ATM parses the service sequence processing result reply message, and displays transaction results on a screen in sequence in accordance with the service sequence, for direct account-checking for the user.

The step (2) includes:

performing, by the bank front system, a relevant processing on the composite service sequence if the bank front system receives the composite service sequence and sending the processed composite service sequence to a transaction monitoring system, or, adding relevant information into the generated composite service sequence message and sending the composite service sequence message to the bank background service system, and

receiving and parsing, by the bank background service system, the composite service sequence message to split the composite service into single services, so as to execute batch processing of the single services in a pipelining manner.

Specifically, in the step (2), if the sequence is a composite service sequence, the composite service sequence message may be designed based on an 8583 message standard technique in the prior art. The format of the composite service sequence message may be:

$$\text{Composite service sequence message} = \{\text{public domain message}\} + \{\text{composite service sequence}\}.$$

According to an 8583 message, only some domains in the 8583 message is used for a certain service, and other domains are irrelevant to this type of service. Therefore, the domain used for the certain service refers to the domain in the 8583 message that is related to the service, and the other domains irrelevant to the service are no longer included in a message collection of the service.

Domains used for a withdrawal service constructs a message collection, {8583 withdrawal message}.

Domains used for a deposit service constructs a message collection, {8583 deposit message}.

Domains used for a transfer service constructs a message collection, {8583 transfer message}.

Domains used for a query service constructs a message collection, {8583 query message}.

.....

Where, there are some public domains in message collections of various services. The public domain is a message sequence composed of domains that are related to an operating user, an operation account, a bank card inherent feature and an operation terminal feature. Common parameters in the public domain are parameters that are commonly used and have a same value for all services and do not change during the service operation process.

For example, such domains may include a Bit02 primary account number domain, a Bit14 bank card expiration date domain, a Bit15 date closing domain, a Bit18 merchant type domain, a Bit22 service point inputting mode domain, a Bit25 service point type code domain, a Bit35 track 2 data domain, a Bit36 track 3 data domain and a Bit52 user password (PIN) data domain in the 8583 message. Other domains are not listed here.

Where, transaction date and time domains including Bit06, Bit12 and Bit13 may serve as a flag of a composite service, i.e. a common flag of all the services, which does not bring effects on the operation and logic of a single service. Such domains may also serve as a public domain, e.g., to serve as a processing time of the composite service. A Bit49 transaction currency code domain and a Bit50 settlement currency code domain may be set as a public domain in consideration of withdrawal.

Although a Bit04 transaction amount domain and a Bit39 return code domain exist in many services, these domains can not serve as a public domain since the values of these domains in different services are different from each other and have marked features of the services.

The public domain of the composite service = {public domain message}.

Thus, it may be defined as:

$$\{8583 \text{ withdrawal inherent message}\} = \{8583 \text{ withdrawal message}\} - \{\text{public domain message}\}$$

Accordingly, the inherent messages of the service, such as query, deposit and transfer, are defined similarly.

{composite service sequence} refers to a sequence composed of single services in the composite service that are related to each other sequentially, and is obtained by sequentially organizing one or more of {8583 withdrawal inherent message}, {8583 query inherent message}, {8583 password-changing inherent message}, {8583 transfer inherent message} and {8583 deposit inherent message}.

The structure of the composite service message is as follows.

$$\text{Composite service sequence message} = \{\text{public domain message}\} + \{\text{composite service sequence}\}.$$

A message header and trailer feature field, a message error correction checking field, a message integrity checking and other message information are not considered here, which may be achieved by the prior art.

For example, the composite service message "query + withdrawal + query" is designed as follows.

{Composite service sequence} = {8583 query inherent message} + {8583 withdrawal inherent message} + {8583 query inherent message}.

"Query + withdrawal + query" message = {public domain message} + {8583 query inherent message} + {8583 withdrawal inherent message} + {8583 query inherent message}.

In this message design, both the domain and the return code of the reply message have been considered.

Furthermore, in the step (2), the process of receiving and parsing, by the bank background service system, the composite service sequence message includes:

21) parsing the public domain of the composite service sequence message, wherein information obtained from the parsing includes: magcard information and password information;

22) parsing a first service message, adding relevant fields of the public domain, such as the magcard information and the password information, to the first service message, packing the first service message into a complete service, and inserting the complete service into a service queue to act as a first service to be executed;

23) parsing subsequent service messages in the composite service sequence and packing them into other complete services, and inserting the complete services into the service queue; and

24) executing the service queue in a batch-processing manner, and recording a processing result of each of the services into a service reply queue in sequence.

Furthermore, in the step (3), the bank background service system encapsulates the information of the service reply queue into a service sequence processing result reply message, and returns, for one time only, the service sequence processing result reply message to the ATM terminal via the bank front system.

In the method for processing services on an ATM according to the present invention, there are constraint conditions for the ATM to design the combination of single services to form the composite services. At present, ordinary services that can be admitted by the ATM include: query, cash withdrawal, deposit, transfer, password changing, payment, etc., and other characteristic services such as score query, recent account details are not considered within the scope of the present invention.

In the method for processing services on an ATM according to the present invention, there are two kinds of the user services: "composite service" and "single service". A user may select the "composite service" or the "single service" according to their requirements when operating on the ATM. The single service is the processing method of the ATM achieved by the prior art, which will not be described in detail herein.

In the method for processing services on an ATM according to the present invention, if the user selects the "composite service" operation, an "account-checking" and a "not account-checking" in the next interface. The "account-checking" means that the system provides a query service automatically whenever each service operation is successful, and returns the balance of the account to the user. If the user, after he selects the "account-checking", selects a composite service sequence "deposit + transfer" operation for performing the deposit service and the transfer service in a batch processing manner, the system extends the composite service sequence "withdrawal + transfer" into a composite service sequence "query + deposit + query + transfer + query", and provides it to the bank background to execute and returns execution results of the five services, which facilitates the user to account-checking. However, as for the "not account-checking", operation results of only two services "deposit" and "transfer" are returned.

In the method for processing services on an ATM according to the present invention, after the user selects the "account-checking" interface, the system enters a composite service sequence selecting interface. Firstly, it is an option for selecting a first service of the composite service sequence, and then it is an option for selecting a second service, and so on. Each page has an "end" button to indicate the completion of the selection of the composite service.

In the method for processing services on an ATM according to the present invention, "cash withdrawal" and "deposit" may not simultaneously occur in one composite service sequence. Although the "cash withdrawal" and "deposit" in one composite service sequence may be achieved on a cash recycling system, this may lead to wasting of resources. "password changing" should be set as the last service in the composite service sequence because a new password should be entered for executing any service immediate to the "password changing".

In the method for processing services on an ATM according to the present invention, since after the password is changed by the "password changing" operation, the new password should be entered for executing all other services. Therefore, the "password changing" service should be set as the last service in the composite service sequence, and should not be set as a preceding or intermediate service in the composite service sequence.

In the method for processing services on an ATM according to the present invention, only six services i.e. query, cash withdrawal, deposit, transfer, payment, password changing, are allowed to be compounded. Preferably, a composite service sequence may be allowed to include up to six services.

In the method for processing services on an ATM according to the present invention, in one service combination operation, the account change only reflects the account change of the service combination. Since the processing is performed by the same background, the correctness of the processing can be ensured in accordance with a batch processing or tasking manner. If it is in a multi-thread manner, during a service combination process, the same account is operated interactively at another place by other services, such as in a multi-card same-account manner, and this problem can be solved by the prior art. For example, a locking technology may be used, with which the account is always locked until the service combination is completed. In another example, a batch processing technique may be used, in which the processing of a service sequence can not be interrupted.

In the method for processing a composite service sequence on the ATM described above, the operation based on the background is a pure software operation, and thus the time spent on the operation is not too long. In the case that one account corresponds to multiple cards, a combination service operation on one of the cards will bring some effects on the operation of the other cards, but account error will not occur, and only overtime return occurs. If such overtime return occurs in non-combination services, the same overtime reason will exist in the non-combination service.

In the method for processing a composite service sequence on the ATM described above, the ATM terminal system generates the composite service sequence message, the format of which may be designed based on the 8583 message format.

In the method for processing a composite service sequence on the ATM described above, the single services are combined into a composite service in a strict order to form a service sequence. That is, the service sequence is not an orderless service combination. The ATM terminal system should perform packing in the strict order to obtain the composite service message. Similarly, the bank background service processing system should carry out operations strictly in the order of the services of the service sequence of the composite service message, record the execution results of all the services, encapsulate the execution results into the composite service reply message in the order of the services of the service sequence, and send the composite service reply message back to the ATM terminal for the user's account-checking.

In addition, for each service operation that incurs a change in account, such as withdrawal, deposit, transfer, the ATM terminal system or the bank background service processing system may automatically insert a query service before and after the current service if a previous service and a subsequent service of the current service are not a query service and return results, for facilitating the user's account-checking.

Compared with the prior art, an ordered one-time centralized processing of multiple services is achieved with the solution of the present invention. The ATM terminal, the network system, the bank front system and the bank background service system are improved technically, and their functions are improved synthetically. The solution in which services that are logically related are processed discretely in the prior art is replaced with another solution in which multiple discrete services of a user are processed in an one-time centralized processing manner, and multiple results are returned and displayed in sequence for one time only, which meets an account-checking requirement of the user, saves the user's time, facilitates the user to compare changes in his account, improves the operation efficiency of ATM, saves resources of the whole ATM transaction system, and especially enhances the processing performance of the bank background service transaction system and the bank front system.

The steps of the flow of the method for processing a composite service sequence on an ATM according to the present invention are illustrated in detail herein after in conjunction with the drawings.

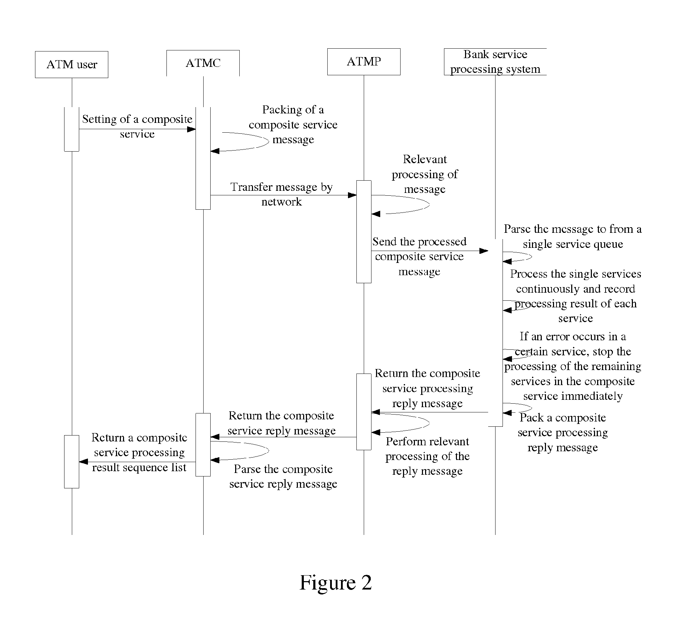

Figure 2 is a basic schematic diagram showing the implementation of a composite service example "query + withdrawal + query" according to the present invention.

If an ATM user is to carry out a transfer, if a user wants to know the account change during the entire transfer operation, the user must carry out a query operation firstly to acquire the account balance in the prior art. Then, the user carries out the transfer operation to transfer required money to a specified account. Finally, the user needs another query operation to acquire the account balance. In this way, the user knows whether the change in the account balance is correct in this transfer service.

However, according to the present invention, the user only needs to carry out a transfer service, and can acquire the change in the account balance by only one operation, and can be aware of whether the change in the account balance is equal to the number of the transferred money, thus determine the account balance of this service operation, and can perform an intuitionistic comparison of the account change. The specific steps are as follows.

1) An ATM user inserts a bank card, enters a correct password, inputs a destination account number and the amount of money to be transferred, and initiates a transfer service processing request to the ATM terminal system.

2) The ATM terminal system carries out a message packing. The message may be packed into an 8583 message transfer single service message, and may alternatively be packed into a composite service message "query + transfer + query" in accordance with the present invention. The ATM terminal system sends the message to the bank front system.

3) The bank front system performs a relevant processing on the message and forwards the message to the bank background service processing system.

4) The bank background service system receives and parses the message, and the bank background service system further determines whether it is a service that involves account changing, such as "withdrawal", "deposit", "transfer" in the case of a single service message. In the case of a service irrelevant to account changing, the message is processed in accordance with the existing technology, otherwise, a "query" service is inserted before and after the service, to form a composite message format of "query + this service + query".

5) In the case of a composite service message, the message is split into a composite service sequence to form a composite service queue. The processing of the composite service queue is atomic, which refers to that: the composite service sequence must be executed for one time only, and any other service that is irreverent to the operation of the service of this account is not allowed to be inserted into the execution process of the composite service sequence, which may be implemented by the known technique, e.g., the locking technique, to lock the account of the service operation.

6) The bank background service system firstly executes a query service, returns an execution result and an account balance, and saves them into a corresponding "query" service reply field in the service sequence temporarily.

7) Then, the bank background service system executes the transfer service, and returns an execution result and an account balance, and saves them into a corresponding "transfer" service reply field in the service sequence temporarily.

8) Finally, the bank background service system executes a query service, returns an execution result and an account balance, and saves them into a corresponding "query" service reply field in the service sequence temporarily.

9) The bank background service processing system executes the composite service reply message, and sends the reply message to the bank front system.

10) The bank front system receives the reply message, performs a corresponding processing, and sends it to the ATM terminal system.

11) The ATM terminal system unpacks the reply message and displays the execution result sequence. Thus the user can see the entire specific situation and specific process of the change in the account balance in this transfer for one time only.

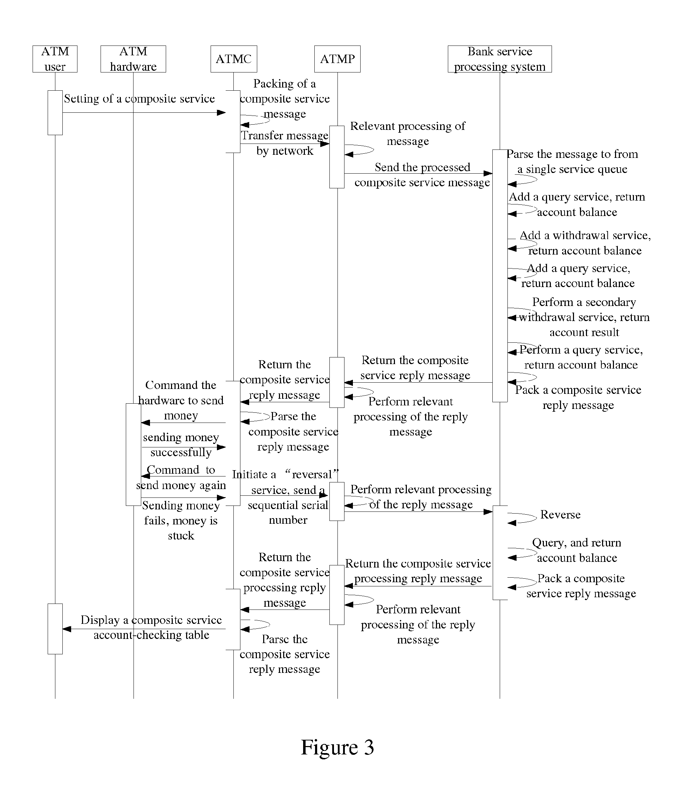

Figure 3 is a basic schematic diagram showing the implementation of a composite service example of "withdrawal + withdrawal + reversal" according to the present invention.

Currently, the bank restricts the amount for one withdrawal on the ATM, which generally is 2000-4000. If the withdrawal amount exceeds this amount, the ATM directly rejects the transaction service. For this reason, if a user wants to withdraw 10,000 yuan, multiple withdrawal operations should be performed, which brings inconvenience to the user and leads to wasting of resources.

Using the composite service processing method of the present invention, the user needs only one withdrawal operation, and the ATM will automatically send moneys for several times by means of a pre-distribute money way. For example, the ATM combines the "withdrawal of 20000" operation into a batch processing message of 10 "withdrawal of 2000", which has more operability. In this way, the ATM terminal system will not refuse the operation that the user inputs 20000 Yuan, and calculate whether to send money by means of a pre-distribute money algorithm, and prompts the user that the money will be sent out for several times after the transaction is successful. In this way, the user will not press the "continue transaction" for 9 times, and the user operating process is greatly simplified; the message that is sent includes 10 requests of "withdrawal of 2000", the message returned from the background includes 10 reply code sequences, and the traffic of the messages is greatly reduced. The ATM terminal system decides whether to send out money according to a reply code in a background reply code sequence, and prompts the user which time that the money is sent out.

As for the "reversal" processing, it is required to match serial numbers of sub-transactions in the batch processing transaction.

Reference is made to Figure 3, which illustrates specific steps of the implementation of a composite service example of "withdrawal + withdrawal + reversal".

1) The ATM user inserts a bank card, enters a correct password, enters the amount of money to be withdrawn to send a service processing request for withdrawing 5000 yuan to the ATM terminal system (assuming that the threshold of a single withdrawal is 3000 yuan).

2) The ATM terminal system accepts the service request (no longer refuses the service due to 5000 > 3000), and performs a pre-distribute money algorithm, and decomposes the "withdrawal of 5000" into a composite service of "withdrawal of 3000 + withdrawal of 2000", and packs the composite service into a "withdrawal of 3000 + withdrawal of 2000" composite service message, and sends the composite service message to the bank front system.

3) The bank front system performs a relevant processing on the message, and forwards the processed message to the bank background service system.

4) The bank background service system receives and parses the message, calculates that the amount change is 5000, and queries and temporarily saves the account balance of the user. If the account balance is not enough, the bank background service system directly returns a service accepting failure and returns the reason of the "account balance is not enough"; otherwise, the process goes to the next step.

6) Then, the bank background service system executes the "withdrawal of 3000" service, and returns an execution result and an account balance, and stores them into the corresponding "withdrawal of 3000" service reply field in the service sequence.

8) Then, the bank background service system performs a "query" service, returns an execution result and an account balance, and then performs the "withdrawal of 2000" service, returns an execution result and an account balance, and finally performs a "query" service and returns an execution result and an account balance.

9) The bank background service system executes the composite service reply message, and sends a reply message to the bank front system.

10) The bank front system performs a corresponding processing after receiving the reply message, and sends the reply message to the ATM terminal system.

11) The ATM terminal system unpacks the reply message, and displays information on a screen to show that the money will be sent out for twice, first 3000 yuan, and then 2000 yuan. If the twice money sending-out are successful, the ATM will display the entire specific situation and specific process of the change in account balance, and the user can perform account-checking for one time only and prints a receipt. If money is stuck in the money sending-out process, the process will go to the next processing.

12) Assuming that the process of sending 3000 yuan is successful but money is stuck in the process of sending 2000 yuan, a "reversal" operation for the withdrawal of 2000 is required. The ATM terminal system initiates a "reversal" service to the front ATM P of the ATM according to the swift number of the "withdrawal of 2000", and the ATM P performs relevant processing on the received reversal message and then forwards it to the bank background service system.

13) After performing the reversal service, the bank background service system saves a reversal result temporarily, actively initiates a query service, and returns an execution result and an account balance.

14) The bank background service system packs the temporarily stored reversal result and query result into a reply message, and sends the reply message to the ATM terminal via the P end.

15) The ATM terminal parses the "reversal" message, and displays the whole composite service processing sequence reply result of the "query + transfer + query" and the specific situation of the changes in the account balance, for facilitating the user's account-checking. At this point, the composite service processing is completed.

An embodiment of the present invention provides a system for processing services on an ATM, including:

an ATM terminal, configured to: determine a type of a user service; combine, according to requirements of the user, services that that are logically related and should be processed in a certain order into a service sequence, wherein the service sequence includes a single service sequence and a composite service sequence; generate a corresponding service sequence message according to the service sequence, and submit, for one time only, the service sequence message to a bank front system and a bank background service system for a centralized batch processing;

wherein, the ATM terminal is further configured to receive and parse a service sequence processing result reply message, and display transaction results on a screen in sequence in accordance with the service sequence, for providing direct account-checking for the user;

a bank front system, configured to perform forwarding and supporting in the process of encapsulating operation results of all services in the service sequence into the service sequence processing result reply message; and

a bank background service system, configured to encapsulate the operation results of all services in the service sequence into the service sequence processing result reply message in sequence, and return, for one time only, the service sequence processing result reply message to the ATM terminal via the bank front system after analyzing and processing.

The bank front system is further configured to perform a relevant processing on the received composite service sequence and send the processed composite service sequence to a transaction monitoring system, or, add relevant information into the generated composite service sequence message and send the composite service sequence message to the bank background service system.

The bank background service system is further configured to receive and parse the composite service sequence message and split the composite service into single services, so as to execute a batch-processing of the single services in a pipelining manner.

The above-described is only preferred embodiments of the present invention, and should not be considered as a limit to the scope of the present invention. It should be noted that, those skilled in the art can make several modifications and variations to these embodiments without deviating from the principle of the present invention, and these modifications and variations are all deemed to fall into the scope of the present invention.

## Claims

1. A method for processing services on an automated teller machine, comprising steps of:

    (1) determining a type of a user service, and combining, according to requirements of the user, services that are logically related and shall be processed in an order into one or more service sequences, wherein the service sequence includes a single service sequence and a composite service sequence;
    (2) generating, by the automated teller machine, a corresponding service sequence message according to the service sequence, and submitting, for one time only, the corresponding service sequence message to a bank front system and a bank background service system for a centralized batch processing;
    (3) encapsulating, by the bank front system and the bank background service system, operation results of all services s in the service sequence sequentially into a service sequence processing result reply message, and returning, for one time only, the service sequence processing result reply message to the automatic teller machine after analysis and processing;
    (4) parsing, by the automatic teller machine, the service sequence processing result reply message, and displaying transaction results on a screen in sequence in accordance with the service sequence, for direct account-checking for the user.

2. The method for processing services on the automated teller machine according to claim 1, wherein the step (2) comprises:

    performing, by the bank front system, a relevant processing on the composite service sequence if the bank front system receives the composite service sequence, and sending the processed composite service sequence to a transaction monitoring system, or adding relevant information into the generated composite service sequence message, and sending the composite service sequence message to the bank background service system; and

receiving and parsing, by the bank background service system, the composite service sequence message to split the composite service into single services, so as to execute batch processing of the single services in a pipelining manner.

3. The method for processing services on the automated teller machine according to claim 1 or 2, wherein in the step (2), if the service sequence is a composite service sequence, the composite service sequence message is designed based on an 8583 message standard technique, and the format of the composite service sequence message is as follows:

$$\text{composite service sequence message} = \{\text{public domain message}\} + \{\text{composite service}$$

$$\text{sequence}\};$$

{composite service sequence} refers to a sequence composed of single services in the composite service that are related to each other sequentially, and is obtained by sequentially organizing one or more of {8583 withdrawal inherent message}, {8583 query inherent message}, {8583 password-changing inherent message}, {8583 transfer inherent message} and {8583 deposit inherent message}; and

the public domain of composite service = {public domain message}; wherein there are some public domains in a message collection of various services, the public domain is a message sequence composed of domains that are related to a operation user, a operation account, a bank card inherent feature and a operational terminal feature; and the common parameters in the public domain are parameters that are all-purpose to all services and have a same value and do not change in a service operation process.

4. The method for processing services on the automated teller machine according to claim 3, wherein in the step (2), the receiving and parsing, by the bank background service system, the composite service sequence message comprises:

21) parsing the public domain of the composite service sequence message, wherein information obtained from the parsing includes magcard information and password information;
22) parsing a first service message in sequence, adding relevant fields of the public domain to the first service message, packing the first service message into a complete service, and inserting the complete service into a service queue to act as a first service to be executed;
23) parsing subsequent services messages in the composite service sequence and packing the services messages into complete services, and inserting the complete services into the service queue; and
24) executing the service queue in a batch-processing manner, and recording a processing result of each of the services into a service reply queue in sequence.

5. The method for processing services on the automated teller machine according to claim 4, wherein in the step (3), the bank background service system encapsulates information of the service reply queue into a service sequence processing result reply message, and returns, for one time only, the service sequence processing result reply message to the automated teller machine terminal via the bank front system.

6. A system for processing services on an automatic teller machine, comprising:

an automatic teller machine terminal, configured to: determine a type of a user service, and combine, according to requirements of the user, services that are logically related and shall be processed in a certain order into a service sequence, wherein the service sequence comprises a single service sequence and a composite service sequence; generate a corresponding service sequence message according to the service sequence, and submit, for one time only, the service sequence message to a bank front system and a bank background service system for a centralized batch processing;

wherein, the automatic teller machine terminal is further configured to receive and parse a service sequence processing result reply message of the service sequence, and display transaction results on a screen in sequence in accordance with the service sequence, for the user to direct account-check;

a bank front system, configured to perform forwarding and supporting in a processing of encapsulating operation results of all service operations in the service sequence into the service sequence processing result reply message; and

a bank background service system, configured to encapsulate the operation results of all services in the service sequence into a service sequence processing result reply message in sequence, and return, for one time only, the service sequence processing result reply message to the automatic teller machine terminal via the bank front system after analyzing and processing.

7. The system for processing services on the automatic teller machine according to claim 6, wherein

the bank front system is configured to perform a relevant processing on the received composite service sequence and send the processed composite service sequence to a transaction monitoring system, or add relevant information into the generated composite service sequence message, and send the composite service sequence message to the bank background service system; and

the bank background service system is further configured to receive and parse the composite service sequence message and split the composite service into single services, so as to execute batch processing of the single services in a pipelining manner.

1

It is determined a type of a user service, and services that are logically related and shall be processed in an order according to requirements of the user are combined to one or more service sequences

2

The ATM generates a corresponding service sequence message according to the service sequence, and submits, for one time only, the corresponding service sequence message to a bank front system and a bank background service system for a centralized batch processing

3

The bank front system and the bank background service system encapsulate operation results of all services in the service sequence sequentially into a service sequence processing result reply message; and returns, for one time only, the service sequence processing result reply message to the ATM after analysis and processing

4

The ATM parses the service sequence processing result reply message, and displays transaction results on a screen in sequence in accordance with the service sequence, for direct account-checking for the user

Figure 1

Figure 2

Figure 3

# EP 2 790 161 A1

## INTERNATIONAL SEARCH REPORT

| | International application No. |
|---|---|
| | PCT/CN2012/083730 |

### A. CLASSIFICATION OF SUBJECT MATTER

G07F 19/00 (2006.01) i

According to International Patent Classification (IPC) or to both national classification and IPC

### B. FIELDS SEARCHED

Minimum documentation searched (classification system followed by classification symbols)

IPC: G07F, H04L, G06Q

Documentation searched other than minimum documentation to the extent that such documents are included in the fields searched

Electronic data base consulted during the international search (name of data base and, where practicable, search terms used)

CNABS, CNTXT, CNKI, VEN: composite, order, ATM, automatic teller machine, self-service terminal, bank, service, business, combine, sequence, message, pre-posed, background

### C. DOCUMENTS CONSIDERED TO BE RELEVANT

| Category* | Citation of document, with indication, where appropriate, of the relevant passages | Relevant to claim No. |
|---|---|---|
| PX | CN 102496218 A (GRG BANKING EQUIPMENT CO., LTD.), 13 June 2012 (13.06.2012), description, paragraphs [0005]-[0133], and figures 1-3 | 1-7 |
| A | CN 101436330 A (BEIJING ORIENT XING-HUA TECHNICAL DEVELOPMENT CO., LTD.), 20 May 2009 (20.05.2009), description, page 4, paragraph 3 to page 5, paragraph 4, and figures 1-8 | 1-7 |
| A | CN 101763590 A (SUN YAT-SEN UNIVERSITY), 30 June 2010 (30.06.2010), the whole document | 1-7 |
| A | CN 101018130 A (WUFANG HENGDE (BEIJING) INVESTMENT CONSULTING CO., LTD.), 15 August 2007 (15.08.2007), the whole document | 1-7 |
| A | CN 101877158 A (SUZHOU DEJAX CREDICT MANAGEMENT TECHNOLOGY CO., LTD.), 03 November 2010 (03.11.2010), the whole document | 1-7 |
| A | CN 101079172 A (CHINA CONSTRUCTION BANK CORPORATION), 28 November 2007 (28.11.2007), the whole document | 1-7 |
| A | US 2009057395 A1 (NCR CORP.), 05 March 2009 (05.03.2009), the whole document | 1-7 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 January 2013 (28.01.2013) | 07 February 2013 (07.02.2013) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer WU, Juan Telephone No.: (86-10) 62084090 |
|---|---|

Form PCT/ISA/210 (second sheet) (July 2009)

17

## INTERNATIONAL SEARCH REPORT
### Information on patent family members

| International application No. |
| --- |
| **PCT/CN2012/083730** |

| Patent Documents referred in the Report | Publication Date | Patent Family | Publication Date |
| --- | --- | --- | --- |
| CN 102496218 A | 13.06.2012 | None | |
| CN 101436330 A | 20.05.2009 | None | |
| CN 101763590 A | 30.06.2010 | None | |
| CN 101018130 A | 15.08.2007 | CN 101018130 B | 08.09.2010 |
| CN 101877158 A | 03.11.2010 | None | |
| CN 101079172 A | 28.11.2007 | None | |
| US 2009057395 A1 | 05.03.2009 | US 7942315 B2 | 17.05.2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110400443